# EUROPEAN PATENT SPECIFICATION

(11) **EP 0 945 779 B1**
(45) Date of publication and mention of the grant of the patent: **24.03.2004**
(21) Application number: 98114230.0
(22) Date of filing: 29.07.1998
(51) Int. Cl.: G06F 3/12

(54) **Dynamic stapling**
Dynamisches Klammern
Agrafage dynamique

(30) Priority: 27.03.1998 US 49298
(43) Date of publication of application: 29.09.1999
(73) Proprietor: Toshiba America Information Systems, Inc., Irvine, California 92618 (US)
(72) Inventor: Bigi, Michael J., 9740 Irvine Blvd., Irvine, CA 92618 (US)
(74) Representative: Blumbach, Kramer & Partner GbR

(56) References cited:
- WO-A-92/11596
- GB-A- 2 264 560

## Description

### BACKGROUND OF THE INVENTION

### 1. Field of the Invention

The present invention relates generally to configuration of printer drivers, and particularly to providing enhanced stapling options for computer-generated printed documents.

### 2. Description of Related Art

Microsoft Windows, like most contemporary operating systems, permits a user to print to any number of printers. These printers may be attached directly to the user's computer, or may be accessible through a network. For each brand and model of printer, and for each operating system, a printer driver is provided. The printer driver aids the operating system in communicating with the corresponding printer.

A printer driver is a software program which resides on the computer, typically on the computer's hard drive and run from memory (e.g., RAM), rather than the printer itself. The purpose of a printer driver is to give the computer an understanding of the capabilities of the printer, so that all the printer features can be used. Most operating systems are supplied with printer drivers for the popular models of printers, but printer drivers may be provided separately. In some operating systems, the printer drivers are associated with particular application programs.

The printer driver will normally tell the computer what printer language the printer uses, which fonts are built in, how many paper feeders it has, what sizes of paper it can support, whether it can print duplex, etc. If a computer software package does not have this information it cannot make full use of the printer, or send the commands required to control the features of the printer.

Most printers have numerous features and options available to the users. These options may be physical or logical. Physical options include paper size, paper type, paper source (tray, feeder) and print resolution. Logical options include layout (landscape or portrait), font mapping, use of PCL or Postscript, overlays/watermarks, number of copies of generate and graphics performance.

Under the Windows operating systems, as in most operating systems, from within any given application, the user can select one of the available printers as the destination for print jobs from that application. Windows also gives the user access to the printer driver from within applications so that the user can select from the options and features available to the selected printer.

The language used by a printer is the set of commands it obeys to format data sent from a computer. These commands are embedded in the data by the computer, and interpreted by the printer.

Printer languages generally fall into two categories, Page Description Languages (PDLs) and Escape Code languages. Page Description Languages are generally more versatile and sophisticated allowing more complex pages and graphics to be created, and are suitable for typographically advanced documents such as presentation materials, technical manuals, catalogues, advertising brochures etc. Page Description Languages are normally used to produce sophisticated, highly formatted output, including graphics design programs, advanced word-processing packages, spreadsheets with extensive charting capabilities, and desktop publishing packages.

Escape Code languages are generally characterized by the structure of the commands they use, each command is prefixed by a special code (normally the Escape code, (1B hexadecimal, 27 decimal) hence the name) to signify that the following characters are a command, and not data to be printed. Escape Code languages do not offer the flexibility of PDLs, and are suited to simple documents such as letters, database printouts, and documents containing simple graphics. Most Escape Code languages do not offer sophisticated typographic features, so while they may be able to use a range of different fonts, most Escape Code languages can only print text in a limited number of sizes, and cannot handle special effects such as printing text at an angle or on a curved line.

Laser printers are very attractive to anyone working with graphics because of their print quality. As a result of this, some laser printers have the ability to emulate other graphics output devices such as pen plotters. The majority of pen plotters use a language called HPGL (Hewlett-Packard Graphics Language), and it is common for a laser printer to offer the ability to use HPGL.

Printers normally use cut-sheet stationery (there are a very few high speed printers using continuous stationery). The page size used in most printers is fixed by the size of the paper input tray/cassette ― the paper container which inserts into the paper feeder mechanism. Most printers are supplied with single-size paper trays for the standard business stationery, which in North America is "Letter" size (8.5" x 11"), and in the rest of the world is A4 (210mm x 297mm). Other paper sizes can be handled using different paper trays, which are normally optional extras, or via a "manual feed" facility, which allows individual sheets of odd-sized paper to be used. The manual feed process is cumbersome, as each sheet of paper has to be fed by hand into the printer. A few models of printer provide an adjustable paper tray capable of taking a range of paper sizes, either as standard or as an optional extra.

In addition to paper, most printers will print on other materials including lightweight card, adhesive labels, and overhead projection transparencies. Individual models of printer each have their limitations in handling these materials, depending on the design of the printing mechanism, these limitations are normally specified by the printer manufacturer in the user manual. Most printers will also print on envelopes using the manual feed facility. Envelope feeders are also often available for holding and feeding a stack of envelopes.

The number and capacity of paper input feeders on a printer varies enormously, depending on the size and type of printer. The majority of personal printers provide one input feeder holding about 100 sheets of standard paper, and a manual feed facility. Paper feeders on larger printers tend to be correspondingly larger, office printers typically hold 250 sheets per tray, and often allow two trays to be loaded at once. Workgroup printers sometimes have special "high capacity feeders," motor-driven paper feeders holding around 1,000 sheets. Large production printers may have several motor-driven feeders holding up to 2,500 sheets each (a 90 p.p.m. production printer can use 5,000 sheets in an hour).

The printer's controller is a dedicated computer which creates an image from commands it receives from the host computer sending the document. A controller has to perform several tasks, including communication (talking to the host computer), interpretation (finding and understanding the commands sent to it, which are normally embedded in the data to be printed), formatting (preparing to create an image, including setting the paper size, margins, selecting fonts etc.), rasterizing (rasterizing is the creation of the image as an array of dots ready for the laser), and finally passing the image to the print engine. Different printer languages make different demands on the controller, and different manufacturers use different approaches to the design of controllers, so each make and model of printer controller operates in a slightly different way, but each has the same effect. The controller is typically integrated into the body of the printer, but it may also be an adjunct to the printer's main body, with a separate power supply, too.

The communications function of a printer controller "talks" to the computer which is sending the document to be printed. It receives data from the computer through a communications port, and tells the computer when to stop sending data so that it can process the data it has received, and when to start sending data again. This process is known as handshaking, there are many different handshaking protocols, the protocol used depends on the type of computer and communications port used. Many office and workgroup printers have several ports, allowing simultaneous connection to several computers, in which case the communications function has to talk to all of them concurrently without mixing up which data comes from which computer, or ask the other computers to wait while it processes the current job.

As it receives the data from the computer the communications function either passes the data directly to the interpreter, or stores it in a queue. The queuing system is known as Job Spooling, and is common on large workgroup and production printers. The incoming data is stored, normally on a hard disk built into the printer, and can be held until the printer operator activates it for printing. On production printers this is the normal way of working, as the computer can then send data at any time, and the printer operator does not have to print it until he or she is ready. On workgroup printers the normal way of working is for the data to be put in the job spool and held until the interpreter is ready (when it has finished printing the current job), at which point the job is automatically printed. The main value of this feature is when several users are sharing a printer, as they can all send their print jobs at the same time, and the printer will store them in the job spool until it's ready to print. A secondary feature of the job spool is in printing multiple copies of a document: The print job only needs to be sent to the printer once to store it in the job spool, but it can be printed several times from the job spool, which reduces the amount of time the computer needs to spend sending the data to the printer.

The interpretation function of the controller, normally called the interpreter, examines the data sent from the computer and identifies the command embedded in the data. The commands will fall into several categories, such as printer control, page format, font management, text layout and graphics, and must be arranged and submitted to the formatter in the correct order and priority, incorrect or invalid commands must also be processed and signaled to the user. The interpreter is usually responsible for implementing the printer control commands, these are commands which perform generic operations such as selecting duplex or simplex, manual feed, and other commands which have no impact on the formatting of the page. In some printers this is all that the interpreter does, in other printers the interpreter may also translate the commands into a shorthand or "tokenized" form which the formatter can process more efficiently. The interpreter passes the structured print data to the formatter.

The formatting function of the controller, called the formatter, takes the structured print data and arranges the page. The first priority is normally to set the paper size, and then the margins, until these are set the line length is unknown. When the line length is set the formatter can arrange the text. Some computer programs send all the commands required to position the text on the page, specifying exactly where each character is placed so that the formatter has very little to do, other programs send the minimum of commands, and expect the printer to work out the details. If, for instance, the formatter receives a command to justify the text between the margins, it must, using the font width information for each letter, space out and calculate the exact position of each letter in the line so that the end of the line of text is both the end of a word, and exactly flush with the right margin. If the font requested by a command is not available in the printer, the formatter must choose a substitute and use that instead. Once the formatter has determined how much can be fitted on the line, it inserts a new line command to start the next line. The formatter lays out the text until it has reached the bottom of the page, or the end of the data. The formatter will also process any graphics on the page, converting vector graphics command to bitmaps and checking the validity of any bitmap graphics sent to the printer. When the complete page is formatted, the formatter passes it, as a very detailed set of commands specifying the font and position of each letter and the position of each bitmap graphic, to the rasterizer.

The rasterizer is the final stage in the process of preparing an image for printing, and converts the commands received from the formatter into an array of dots. It takes the bitmap for each character of text, and places it at the specified position in the array, then overlays the array with any bitmap graphics, to form the pattern to be printed.

Typical printers do an adequate job of printing documents, but few provide "finishing" capabilities such as collating and stapling. With a newer generation of printers based upon digital copiers, some of the features of the copier are made available during printing. Thus, a number of printers now permit a user to quickly print multiple copies of his document, have the copies collated or sorted, and also have the copies stapled.

The finishers of such printers and of typical copiers allow stapling at only a single position, typically the top left comer of the document. Some special-purpose or high end copiers also allow booklet stapling, where two staples are placed along the left edge of the document a spaced distance apart. In these copiers, the sorter includes two staplers in fixed positions, with one of the staplers being used in both the one- and two-staple modes. Thus, stapling options at best have been limited to two types: a single staple at the top left comer of the document, or two staples along the left edge of the document.

It has been suggested, though, to provide more flexible stapling options in a printer. According to one proposed system, the position of a stapler in a device is moveable with respect to a printed page. In this system, the finisher can place staples at any of the four comers of the document, as well as at any of four angles (horizontal, vertical, angled left, or angled right). Although it was speculated that the staple position and angle could be made selectable by a user from a computer attached to a printer, devices and methods for actually achieving the suggested ends were not disclosed.

WO 92/11596 teaches a printing system with an automatic control of a reconfigurable printer based on the user's print job requirements such as stapling position, paper size etc. specified in a document header. If the print job requirements cannot be realized by the printer, then the print job requirements are automatically changed so as to attain a "best match" between the print job requirements and the printer capability.

GB-A-2 264 560 teaches an imaging apparatus having means for identifying the orientation of the image on each page and, if a faulty orientation is detected, orientation is corrected by electronically rotating the digitally-stored image.

It is therefore the object of the invention to provide enhanced printer stapling capabilities. It is a further object to increase the number of possible staple positions without adding additional staplers to the finisher. It is a further object to make fully available the stapling capabilities of a printer across all paper types and feed directions. It is a further object to provide enhanced printer stapling capabilities without requiring modification of the printer or finisher.

### SUMMARY OF THE INVENTION

The previously described objects are achieved in a system and method for printing documents which provide a user with extended staple position options. In accordance with the invention, which is defined in detail in the appending independent claims, a user of a printer may specify where he wishes staples to be put into his document. The user is provided with a view of a sheet of paper on his computer screen, and can select with his mouse where he wants the staples to be put. By knowing the paper size, feed orientation and image orientation, the printer driver can then map the user's selected staple positions to the physical capabilities of the printer. The printer driver instructs the printer controller of the stapling position for the job, and how much rotation (if any) the controller should apply to the image before printing.

In accordance with the method of the invention, there is provided an object instance having at least one page which is to be printed from a computer workstation to a printer. The computer workstation includes a display, a user input device and a printer driver. The printer includes a stapling unit capable of placing cinching devices in at least two positions. The method then comprises the steps of a user at the computer workstation indicating that the object instance is to be printed; invoking the printer driver; the printer driver obtaining staple or other cinching device position capabilities, paper size capabilities and feed orientation capabilities of the printer; the printer driver obtaining a desired paper type and a desired image orientation of the object instance; the printer driver determining, as logical staple positions, where on the printed pages of the object instance the stapling unit could attach cinching devices; the printer driver displaying on the display a representation of at least one page of the object instance and the logical staple positions; the user, using the input device, indicating to the printer driver which of the logical staple positions where the user wishes to have the printer place cinching devices on a printed copy of the object instance; and the printer driver sending one or more commands to the printer indicating an amount of rotation for the object instance and where to place cinching devices to achieve the logical staple positions indicated by the user.

Still further objects and advantages attaching to the device and to its use and operation will be apparent to those skilled in the art from the following particular description.

### DESCRIPTION OF THE DRAWINGS

Further objects of this invention, together with additional features contributing thereto and advantages accruing therefrom, will be apparent from the following description of a preferred embodiment of the present invention which is shown in the accompanying drawings with like reference numerals indicating corresponding parts throughout and which is to be read in conjunction with the following drawings, wherein:
Figure 1 is a block diagram of a computer network for use in conjunction with the invention.
Figure 2 is a representative screen shot showing a step in selecting a printer configuration in accordance with the invention.
Figure 3 is a representative screen shot showing another step in selecting a printer configuration in accordance with the invention.
Figures 4A and 4B are representative partial screen shots showing stapling options in accordance with the invention.
Figures 5A and 5B show possible physical staple positions for a rotated page.
Figures 6A and 6B show possible physical staple positions for an unrotated page.
Figure 7 is a flow chart of a method of selecting staple positions for a printed document in accordance with the invention.

These and additional embodiments of the invention may now be better understood by turning to the following detailed description wherein an illustrated embodiment is described.

### DETAILED DESCRIPTION OF THE INVENTION

Throughout this description, the preferred embodiment and examples shown should be considered as exemplars, rather than limitations on the apparatus and methods of the present invention.

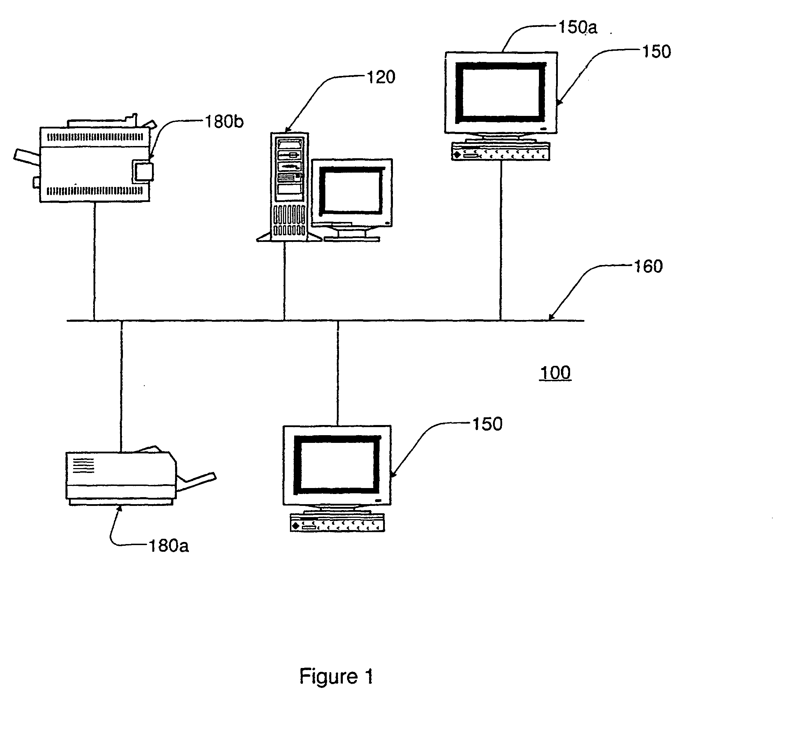

Referring now to Figure 1, there is shown a block diagram of a LAN 100 in accordance with the invention. The LAN 100 includes a file server 120, computer workstations 150, and printers 180a, 180b, coupled to one another via network communications lines 160. The file server 120 and computer workstations 150 are preferably those well known in the art, such as computers having Intel Corporation (Santa Clara, California) microprocessors and running Microsoft Corporation (Redmond, Washington) Windows operating systems. On computer workstations such as computer workstations 150 there typically will be a number of application programs with which a user may create, edit and print object instances by use of input output devices such as a display 150a, a mouse and a keyboard (not shown). These application programs may be for word processing, graphics, spreadsheets, presentations and many other purposes.

The LAN 100 may also include hubs, routers and other devices (not shown). Furthermore, printers may be coupled directly to the file server 120 and computer workstations 150. Additional printers and other devices, such as multifunction peripherals (MFPs) and fax devices, may be coupled to the LAN 100 as described above.

Before proceeding further, a few terms are defined. By "server," it is meant hardware or software which provides network services. By "file server," it is meant a computer which controls access to file and disk resources on a network, and provides security and synchronization on the network through a network operating system. By "computer workstation," it is meant a client computer which routes commands either to its local operating system or to a network interface adapter for processing and transmission on the network. A computer workstation may function as a server by including appropriate software, and may be for example, a print server, archive server or communication server. Furthermore, a computer workstation may be used in non-networked environments, wherein, for example, a printer would be directed connected to the computer workstation. By "software" it is meant one or more computer interpretable programs and modules related and preferably integrated for performing a desired function. By "object instance" it is meant an instance of that logical construct which a given application creates and manipulates, e.g. the object instance of a word processing document is a document, the object instance of a spreadsheet program is a spreadsheet.

By "printer driver" it is meant (1) a program which takes into account the physical characteristics of a printer and which is used to convert graphics and text into device-specific data at the time of printing, or (2) a file which describes the physical characteristics of a printer and which is used by an operating system or other software to convert text and graphics into device-specific data at the time of printing.

By "printer" it is meant an output device that produces a hard copy record of data, typically on paper, and includes laser printers, ink jet printers and print-capable multifunction peripherals. A printer in accordance with the invention includes a stapling unit. By "stapling unit" it is meant an electro-mechanical device which is integrated with a printer either internally or as an adjunct through, e.g., a stapler-sorter or finisher, and is responsive to instructions sent to the printer to attach a bendable cinching device, e.g., a staple, to hard copy output of the printer.

Those of ordinary skill in the art are knowledgeable about the operation of object oriented operating systems such as MS Windows and application programs designed to operate therewith. Hence, most of the matter appearing in the drawings, including the functionality represented by objects shown in the drawings, will be understood by those of ordinary skill in the art with limited description. Explanation of the use of MS Windows and various applications programs are widely available in publications such as Windows 95 For Dummies, 2nd Edition and WordPerfect 8 For Windows For Dummies (both published by IDG Books).

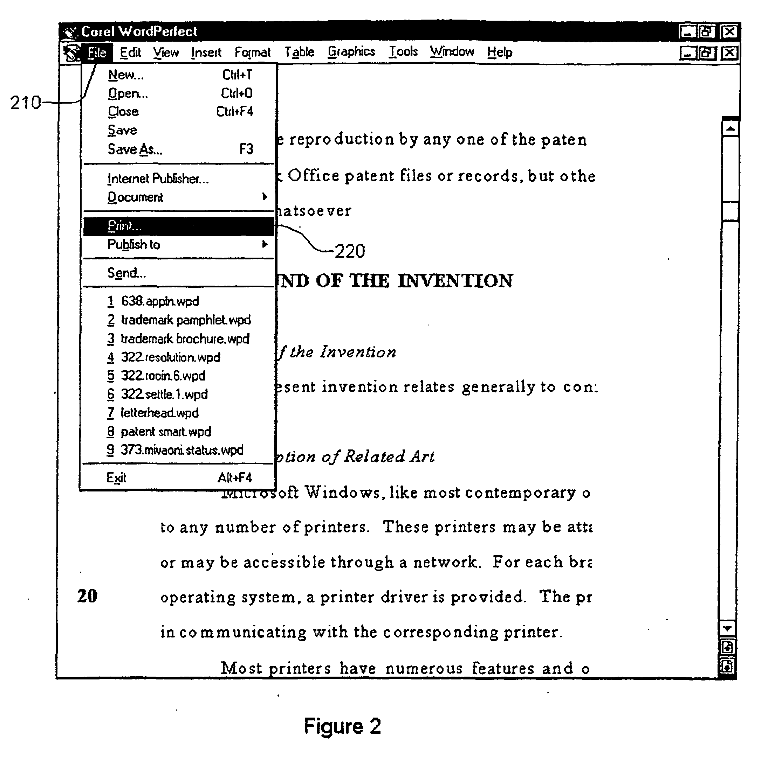

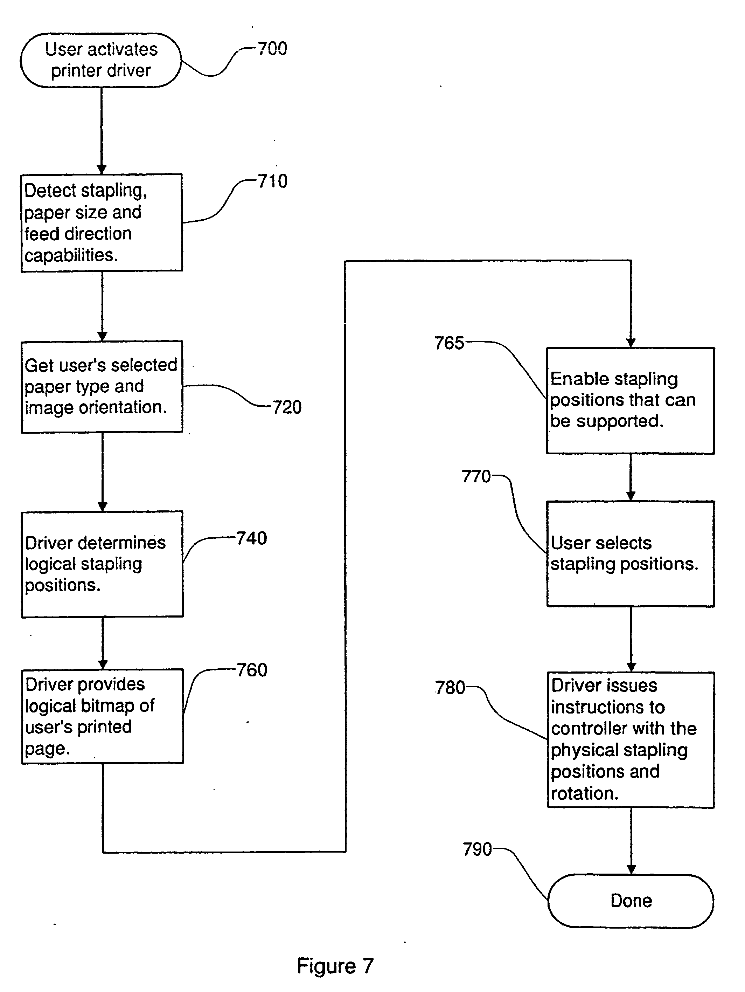

The method of configuring a printer in accordance with the invention will now be explained with reference to Figure 7, showing a flowchart of the method, and Figures 2-6, showing representative screen shots and partial screen shots. In the first step, a user indicates an object instance for printing and activates a printer driver at one of the computer workstations 150 (step 700). In MS Windows, object instances may be selected for printing from within a particular application while editing the object instance, such as a word processor, or from views of lists of files, such as the Windows Explorer. The object instance may be, for example, a document, or one or more selected pages of a document. ,

Figure 2 shows a screen shot of a typical word processing application program, WordPerfect. WordPerfect is published by Corel Corporation (Ottawa, Canada). In Figure 2, the editing of a document by WordPerfect is shown. Like many MS Windows applications, to print a document from WordPerfect, the user selects "File" 210 from the menu bar at the top of the screen, then "Print" 220. Short cuts are also typically provided and implemented through, for example, macros, short-cut keys, and on-screen icons/buttons.

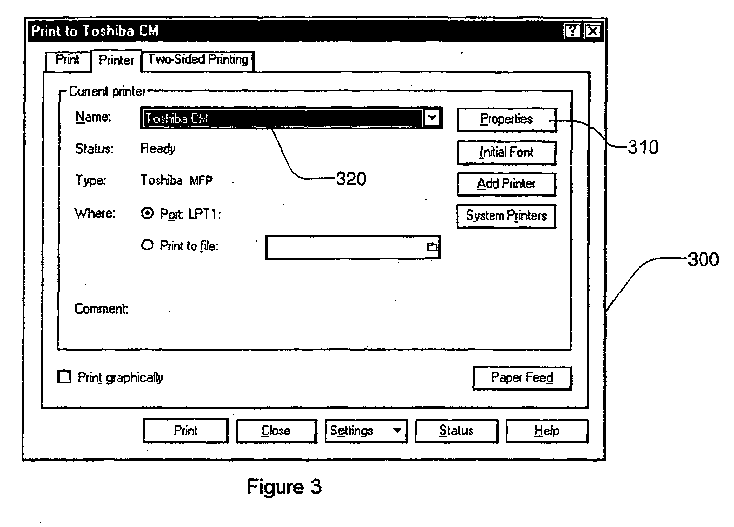

Once the user has selected the Print function, WordPerfect, like most MS Windows applications, generates a dialog window 300 such as that shown in Figure 3. From this dialog box the user may select from a list 320 a particular printer to print to, if more than one are available. Figure 1 shows two printers 180a, 180b accessible to computer workstations 150.

The dialog window 300 typically allows the user to activate the printer driver of the selected printer to modify certain default properties for print jobs sent to the selected printer, or to take advantage of certain capabilities of the printer. This is typically achieved by pressing a "Properties" button 310 with the mouse.

This ability to modify the printer's properties from the printer driver should not be confused with the ability to modify an object instance's print characteristics. For example, WordPerfect allows the user to select different paper types, fonts, and many other print output characteristics. However, these options are available irrespective of the capabilities of the selected printer, or any printer which might be available. Typically, if the user has selected a particular output characteristic which the printer does not support, the printer will attempt to match the selected characteristic with the selected printer's actual capabilities.

Once the printer driver has been invoked, it gathers two types of information. The first type relates to the capabilities of the selected printer. The second type of information relates to the object instance to be printed.

In step 710, the printer driver obtains the staple position capabilities, paper size capabilities and feed orientation capabilities of the selected printer. There are well known techniques for printer drivers to obtain a printer's capabilities, and no particular technique is meant to be excluded. These include interrogation of the printer, and reliance upon installation defaults or other defaults. Since a printer with a stapling unit is necessary for performing the method, it is presumed for the present purposes that the selected printer includes a stapling unit. By "staple position capabilities" it is meant the locations on printed pages where the stapling unit can place staples and this may be paper-size dependent. By "paper size capabilities" it is meant the types and sizes of paper for which the printer is configured to have available for printing. An empty or improperly filled paper source could affect this. By "feed orientation" it is meant the direction which the printer feeds out hard copy, and is typically defined as "long edge" feed or "short edge" feed. Long edge feed ("LE") means that, for example, for letter-size paper, the paper feeds along the 11" edge, and feeds out an 8½" edge.

Next, in step 720, the printer driver obtains a paper type selection and image orientation selection for the object instance. Many application programs have means for allowing the user to select paper type and image orientation. Because some application programs lack such a feature, most printer drivers provide a similar feature. Typically, selections made from the application program will override selections made through the printer driver. Preferably, the user or the printer driver insures that the application paper size settings and orientation are the same as that selected from the printer driver.

In typical application programs, when a user creates a document, the application program assigns a default paper type and default image orientation to the document and this is stored as part of the document. The paper sizes typically offered by application programs include letter, legal and A4. The image orientations typically offered by application programs are portrait and landscape. Image orientation should not be confused with feed orientation. Whereas feed orientation refers to how the paper comes out of the printer, the image orientation refers to how the object instance appears on the selected paper size. Typical application programs include means for allowing the user to change the paper type and image orientation. Even for non-Windows operating systems, there is usually a default paper size and image orientation.

Because a printer driver typically knows more about the capabilities of an associated printer though, a printer driver typically allows a user to select settings which more closely conform to the physical capabilities of the associated printer. Typical printer drivers present a user with a list of available paper sources, such as cassettes, and the user selects from the list. Typical printer drivers also present a user with a list of available paper types, and the user selects from this list. Typical printer drivers also present a user with a list of available image orientations, and the user selects from this list. The preferred printer driver includes these capabilities.

Preferably, if the user selects a paper source from the printer driver, the printer driver limits the list of paper types to only those which the printer driver knows are available from the selected paper source. For example, if the user selects a paper cassette which has legal size paper, then the printer driver limits the user's choice of paper types to legal.

With the paper type and image orientation now selected, and knowing the printer's capabilities with respect to paper types, feed orientation and stapling, the printer driver determines at what positions the stapling unit can put staples on a printed copy of the object instance (step 740). These potential staple positions are referred to herein as "logical staple positions." If the user did not select a paper source, then the printer driver preferably defaults to selecting a paper source with long edge feed stock. The determination of logical staple positions may be either according to an algorithm or by looking up the logical staple positions in a table. The table may, for example, be incorporated into the printer driver or in the printer and accessible to the printer driver.

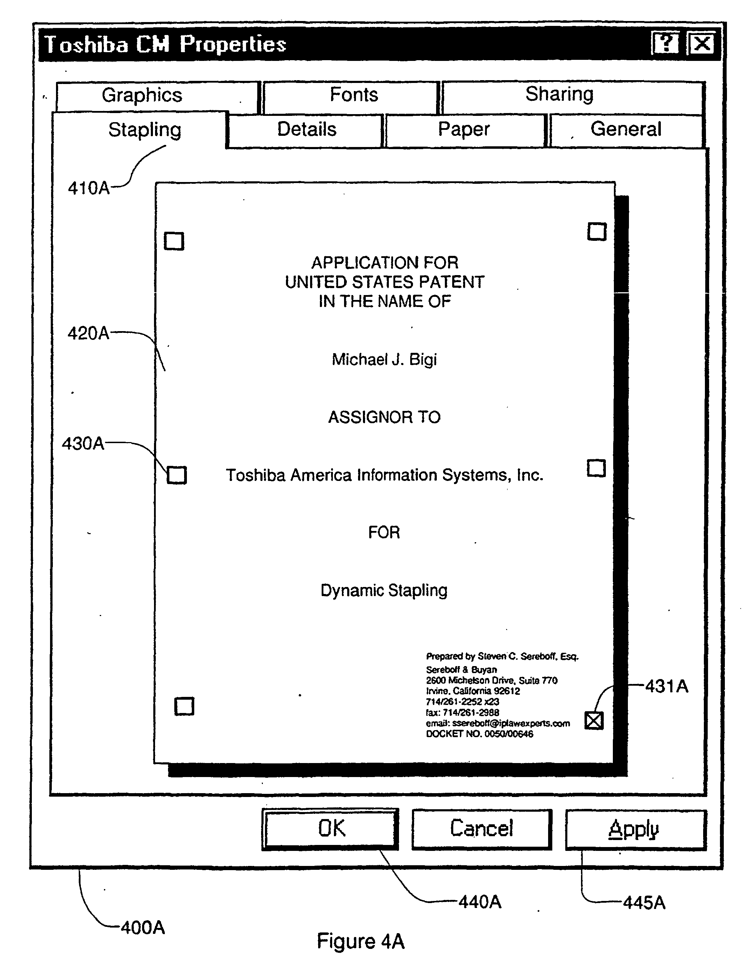

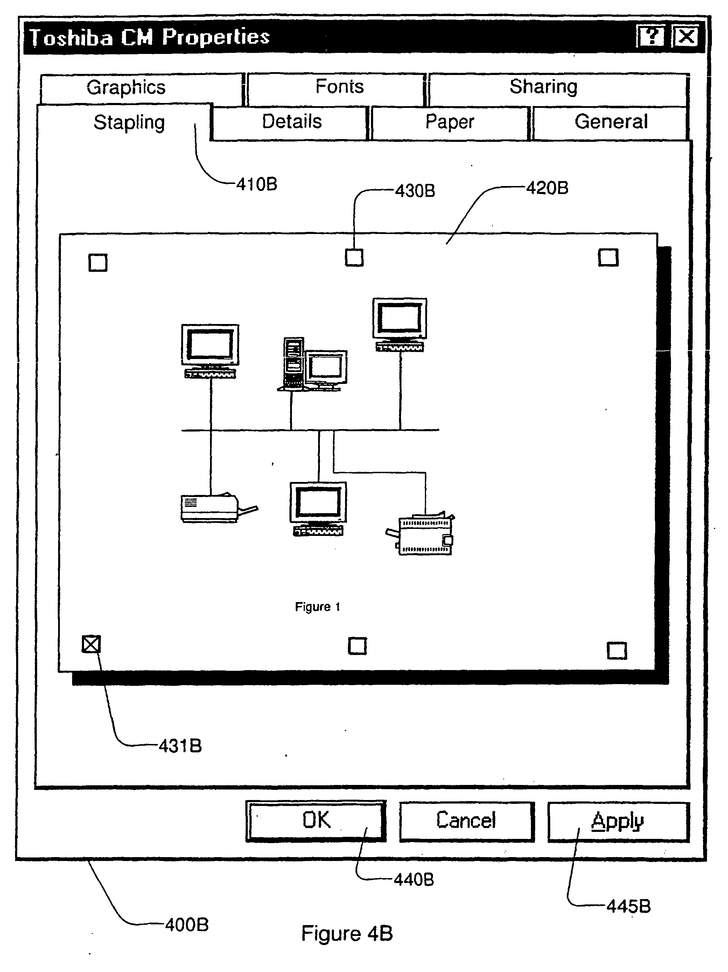

Next, the printer driver displays on the computer workstation's display 150a a representation of at least one page of the object instance (step 760) and the logical staple positions (step 765). Preferably only the first page is shown. The printer driver in accordance with the invention may generate a dialog 400A, 400B such as those shown in Figures 4A and 4B.

For the sake of this example, it is assumed that a letter size paper and source have been selected, and that the printer can put staples in three places along the left edge of the paper. It is also assumed that the paper is long edge fed.

In Figure 4A, there is shown on a "Stapling" tab 410A a reduced-size representation 420A of one page of the selected object instance (the first page of this patent application). On the representation 420A, the printer driver preferably superimposes one or more check boxes 430A at each logical stapling position. The representation 420 is a letter size, portrait orientation document. The representation 420A is preferably proportional to what will be printed and preferably appears top-side up (rather than up-side down or otherwise rotated).

In Figure 4B, there is shown a similar "Stapling" tab 410B with a reduced-size representation 420B of one page of a landscape orientation document. Check boxes 430B show the logical stapling positions.

Assuming that two documents are to be printed to the same printer, using the same cassette and the same paper size, but only their image orientations differ, the logical stapling positions relative to the page should be the same. This is shown in Figures 4A and 4B. In Figure 4A, the logical stapling positions are three places on each of the long edges of the paper. In Figure 4B, the logical stapling positions are also three places on each of the long edges of the paper.

As mentioned, the hypothetical printer of the example can put staples only in three places on the left side of a long edge fed letter-size paper. However, the printer driver has recognized that if the image were rotated 180° before printing, a mirrored set of staple positions are obtainable along the right edge of the paper.

In Figure 4A, check box 431A is shown checked. This is preferably achieved by the user moving a mouse cursor over the check box 431A and clicking with the mouse (step 770). However, other techniques for the user selecting stapling positions are also within the scope of the invention, and may include the user moving "logical staples" onto the page at desired positions, typing with a keyboard names of positions, radio buttons, etc. In one embodiment, when the mouse cursor is moved over the bitmap area representing the logical view of the page, the pointer changes to a hand at any logical stapling position. If the user pushes the left-mouse button when over one of the logical stapling positions, then that position is selected as well as the corresponding item in the radio button group.

In some embodiments, selection of one logical stapling position might foreclose others. For example, the stapling unit may only be capable of putting staples on one edge of the page. However, if the page is rotated 180°, the stapling unit could put staples on the opposite edge of the page. In such instances, preferably if the user selects a logical stapling position which forecloses other logical stapling positions, the printer driver makes the foreclosed logical stapling positions unselectable. This is preferably done by greying the affected check boxes 430A and not checking them if the user attempts to select them. Alternatively, the check boxes 430A could be not displayed. In the example of Figures 4A and 4B, selection of any logical stapling position 430A, 430B will foreclose all of the logical stapling positions on the opposite side of the page.

Although the Figures 4A and 4B show reduced-size representations of one page of an object instance, other representations are also within the scope of the invention. Preferably, a large letter (e.g., "T" or "A") is used as the representation, since this provides a simpler implementation. Alternatively, a graphic could be used. The important feature of the representation is that it convey to the user the logical staple positions in relation to the printed appearance of the object instance.

The user then confirms his selections by clicking the mouse on an "OK" button 440A, 440B or an "Apply" button 445A, 445B. Without any further user interaction, the printer driver then determines whether, for the stapling unit to put staples at the selected logical stapling positions, the image of the object instance must be rotated, and also the physical stapling positions which correspond to the selected logical stapling positions on the page as rotated or not.

The printer driver then, in step 780, issues instructions to the printer to print the object instance as selected by the user, including instructions of which physical stapling positions were selected and whether to rotate the image before printing.

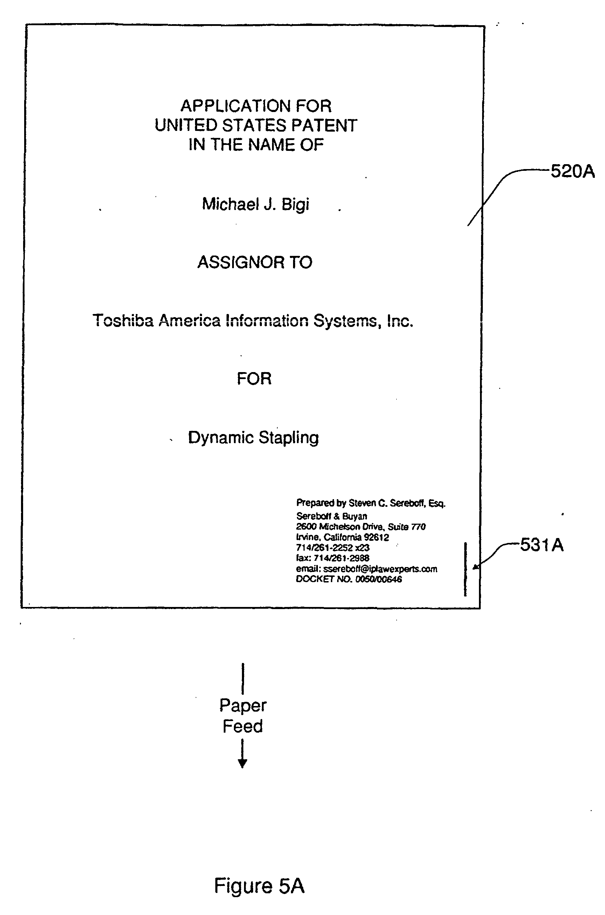

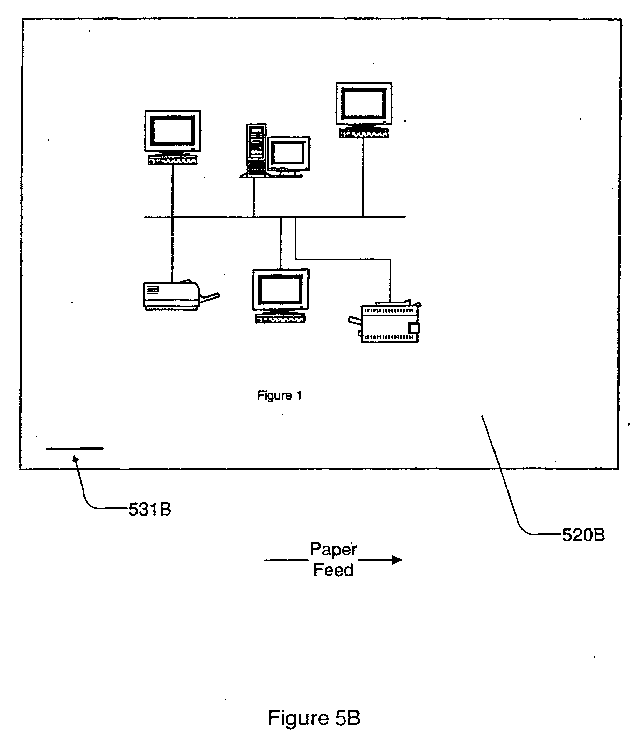

As shown in Figure 5A, the image 520A of the printed object instance was rotated 180° so that a staple 531A could be placed at logical stapling position 431A (Figure 4A). Similarly, as shown in Figure 5B, the image 520B of the printed object instance was rotated 180° so that a staple 531B could be placed at logical stapling position 431B (Figure 4B). Such a result might be achieved, for example, by sending a printer command to rotate the image 180° and put a staple at position "3."

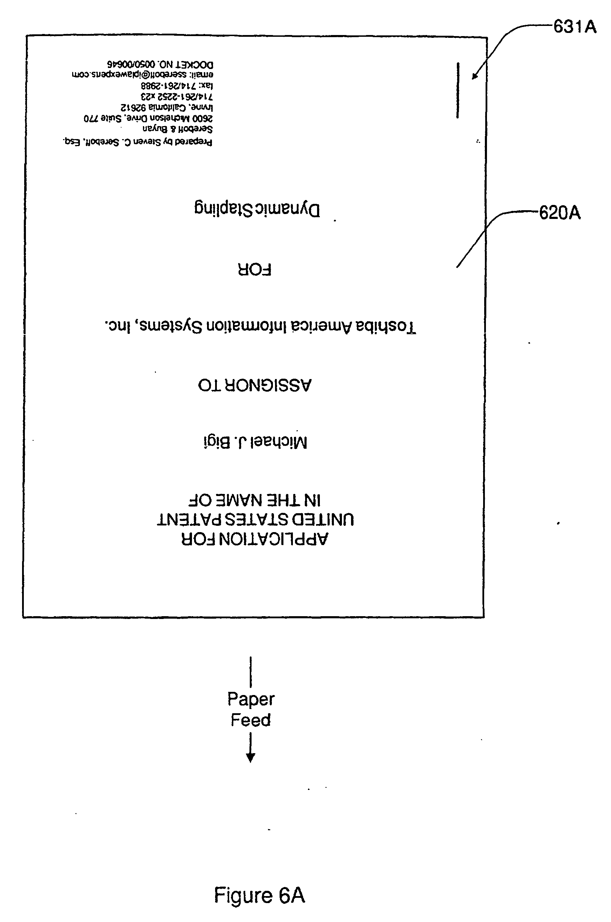

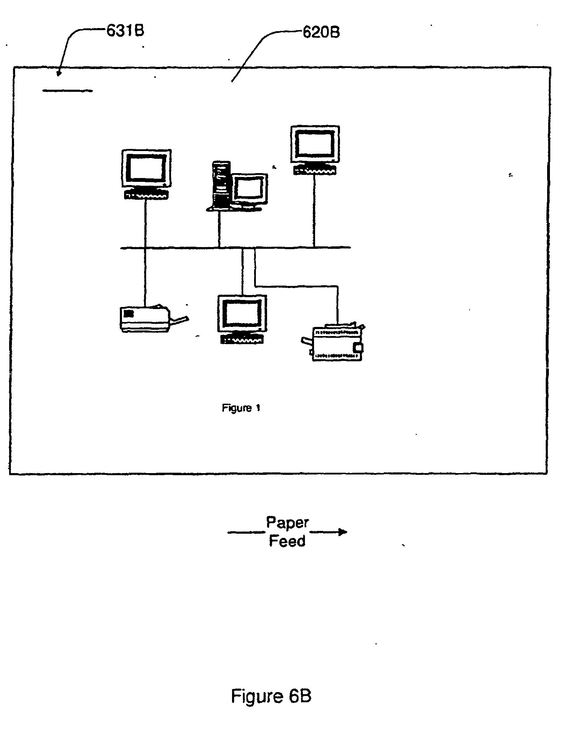

In contrast, as shown in Figures 6A and 6B, if staples 631A, 631B are to be placed on the opposite side of the pages from those shown in Figures 5A and 5B, then the image is printed without rotation and the staples are attached 631A, 631B to the respective printed pages without rotations.

There are many possible combinations of printer capabilities with respect to orientation, paper type, feed direction and physical stapling position. Thus, it should be appreciated that it may be necessary or preferable to rotate the image of the object instance at 90°, 180°, 270° or possibly even other amounts. All of these rotations are within the scope of the invention. The important feature is that the printer driver is able to make available all possible logical stapling positions to the user, and once the user has selected stapling positions, the printer driver sends appropriate instructions to the printer identifying the physical stapling positions and pre-printing image rotation to achieve this.

Although exemplary embodiments of the present invention have been shown and described, it will be apparent to those having ordinary skill in the art that a number of changes, modifications, or alterations to the invention as described herein may be made, none of which depart from the present invention. All such changes, modifications and alterations should therefore be seen as within the scope of the present invention. For example, although the invention is described with respect to LAN 100, features of the invention as defined by the claims could also be used to great benefit in a non-networked environment.

## Claims

1. A method of printing an object instance having at least one page from a computer workstation (150) to a printer (180a, 180b), the computer workstation (150) including a display, a user input device and a printer driver, the printer (180a, 180b) including a stapling unit capable of placing cinching devices in at least two positions, the method comprising the steps of:
(a) a user at the computer workstation (150) indicating that the object instance is to be printed;
(b) invoking (700) the printer driver;
(c) the printer driver obtaining (710) cinching device position capabilities, paper size capabilities and feed orientation capabilities of the printer (180a, 180b);
(d) the printer driver obtaining (720) a desired paper type and a desired image orientation of the object instance;
(e) the printer driver determining (740), as logical staple positions, where on the printed pages of the object instance the stapling unit could attach cinching devices;
(f) the printer driver displaying (760, 765) on the display a representation (420A; 420B) of at least one page of the object instance and the logical staple positions (430A, 431A; 430B, 431B);
(g) the user, using the input device, indicating (770) to the printer driver which of the logical staple positions (431A; 431B) where the user wishes to have the printer (180a, 180b) place cinching devices on a printed copy of the object instance; and
(h) the printer driver sending (780) one or more commands to the printer (180a, 180b) indicating an amount of rotation for the object instance and where to place cinching devices to achieve the logical staple positions (431A; 431B) indicated by the user.

2. A method of printing an object instance from a computer workstation (150) to a printer (180a, 180b) set forth in claim 1 where in step (c), the printer driver obtaining the stapling, paper size and feed orientation capabilities of the printer (180a, 180b) by interrogating the printer (180a, 180b) and the printer (180a, 180b) communicating the capabilities to the computer workstation (150).

3. A method of printing a document from a computer workstation (150) to a printer (180a, 180b) as set forth in claim 1 where in step (c), the printer driver obtaining the stapling, paper size and feed orientation capabilities from a default source in the computer workstation (150).

4. A method of printing an object instance from a computer workstation (150) to a printer (180a, 180b) as set forth in any of the claims 1 to 3 where in step (d), the printer driver obtaining the desired paper type and image orientation of the object instance from an application program running on the computer workstation (150).

5. A method of printing an object instance from a computer workstation (150) to a printer (180a, 180b) as set forth in claim 4 where the desired paper type and image orientation of the object instance are either selected by the user through the applications program or are set to predefined defaults.

6. A method of printing a document from a computer workstation (150) to a printer (180a, 180b) as set forth in any of the claims 1 to 5 where step (d) is performed prior to step (c).

7. A method of printing an object instance from a computer workstation (150) to a printer (180a, 180b) as set forth in any of the claims 1 to 6 where in step (f), the representation (420A, 420B) including a reduced image of at least one page of the object instance.

8. A method of printing an object instance from a computer workstation (150) to a printer (180a, 180b) as set forth in any of the claims 1 to 7 where in step (f), the representation (420A, 420B) of the object instance is displayed in the desired orientation.

9. A method of printing an object instance from a computer workstation (150) to a printer (180a, 180b) as set forth in any of the claims 1 to 8 wherein the stapling unit can put cinching devices in three fixed positions and the printer driver displays more than three logical staple positions (430A, 431A; 430B, 431B).

10. A method of printing a document from a computer workstation (150) to a printer (180a, 180b) as set forth in any of the claims 1 to 8 wherein the stapling unit can put cinching devices in any of a predefined range of positions along at least one edge of a sheet of paper printed by the printer (180a, 180b).

11. A printing system for printing an object instance having at least one page, the printing system (100) comprising:
(a) a computer workstation (150) including a display, a user input device and a printer driver; and
(b) a printer (180a, 180b) including a stapling unit capable of placing cinching devices in at least two positions,
wherein the printer driver includes instructions or means for:
(i) obtaining (710) cinching device position capabilities, paper size capabilities and feed orientation capabilities of the printer (180a, 180b);
(ii) obtaining (720) a desired paper type and a desired image orientation of the object instance;
(iii) determining (740), as logical staple positions (430A, 431A; 430B, 431B), where on the printed pages of the object instance the stapling unit could attach cinching devices;
(iv) displaying (760, 765) on the display a representation (420A; 420B) of at least one page of the object instance and the logical staple positions (430A, 431A; 430B, 431B);
(v) accepting a user input from the input device indicating (770) which of the logical staple positions (431A; 431B) where the user wishes to have the printer (180a, 180b) place cinching devices on a printed copy of the object instance; and
(vi) sending (780) one or more commands to the printer (180a, 180b) indicating an amount of rotation for the object instance and where to place cinching devices to achieve the logical staple positions (431A; 431B) indicated by the user.

12. A printing system for printing an object instance having at least one page as set forth in claim 11, the printer driver including instructions or means for obtaining the stapling, paper size and feed orientation capabilities of the printer (180a, 180b) by interrogating the printer (180a, 180b).

13. A printing system for printing an object instance having at least one page as set forth in any of the claims 11 or 12, the printer driver including instructions or means for obtaining the stapling, paper size and feed orientation capabilities from a default source in the computer workstation (150).

14. A printing system for printing an object instance having at least one page as set forth in any of the claims 11 to 13, the printer driver including instructions or means for obtaining the desired paper type and image orientation of the object instance from an application program running on the computer workstation (150).

15. A printing system for printing an object instance having at least one page as set forth in claim 14 where the desired paper type and image orientation of the object instance are either selected by the user through the application program or are set to predefined defaults.

16. A printing system for printing an object instance having at least one page as set forth in any of the claims 11 to 15, the representation (420A, 420B) including a reduced image of at least one page of the object instance.

17. A printing system for printing an object instance having at least one page as set forth in any of the claims 11 to 16, the printer driver including instructions or means for displaying the representation (420A, 420B) of the object instance in the desired orientation.

18. A printing system for printing an object instance having at least one page as set forth in any of the claims 11 to 17 wherein the stapling unit can put cinching devices in three fixed positions and the printer driver provides more than three logical stapling positions (430A, 431A; 430B, 431B).

19. A printing system for printing an object instance having at least one page as set forth in any of the claims 11 to 17 wherein the stapling unit can put cinching devices in any of a predefined range of positions along at least one edge of a sheet of paper printed by the printer (180a, 180b).

20. A controlling device for controlling a printing system, the controlling device having a printer driver which can be installed in or/and is able to communicate with a computer embodied therein for printing an object instance having at least one page from a computer workstation (150), the computer workstation (150) including a display and a user input device, the printer driver including means or instructions for:
(a) obtaining (710) cinching device position capabilities, paper size capabilities and feed orientation capabilities of a printer (180a, 180b), the printer (180a, 180b) including a stapling unit capable of placing cinching devices in at least two positions;
(b) obtaining (720) a desired paper type and a desired image orientation of the object instance;
(c) determining (740), as logical staple positions (430A, 431A; 430B, 431B), where on the printed pages of the object instance the stapling unit could attach cinching devices;
(d) displaying (760, 765) on the display a representation (420A; 420B) of at least one page of the object instance and the logical staple positions;
(e) accepting a user input from the input device indicating (770) which of the logical staple positions (431A; 431B) where the user wishes to have the printer (180a, 180b) place cinching devices on a printed copy of the object instance; and
(f) sending (780) one or more commands to the printer (180a, 180b) indicating an amount of rotation for the object instance and where to place cinching devices to achieve the logical staple positions (431A; 431B) indicated by the user.

21. A controlling device as set forth in claim 20, the printer driver including means or instructions for obtaining the stapling, paper size and feed orientation capabilities of the printer by interrogating the printer (180a, 180b).

22. A controlling device as set forth in any of the claims 20 or 21, the printer driver including means or instructions for obtaining the stapling, paper size and feed orientation capabilities from a default source in the computer workstation (150).

23. A controlling device as set forth in any of the claims 20 to 22, the printer driver including means or instructions for obtaining the desired paper type and image orientation of the object instance from an application program running on the computer workstation (150).

24. A controlling device as set forth in any of the claims 20 to 23, the representation (420A; 420B) including a reduced image of at least one page of the object instance.

25. A controlling device as set forth in any of the claims 20 to 24, the printer driver including means or instructions for displaying the representation (420A; 420B) of the object instance in the desired orientation.

26. A controlling device as set forth in any of the claims 20 to 25, wherein the stapling unit can put cinching devices in three fixed positions and the printer driver provides more than three logical stapling positions (430A, 431A; 430B, 431B).

27. A controlling device as set forth in any of the claims 20 to 25, wherein the stapling unit can put cinching devices in any of a predefined range of positions along at least one edge of a sheet of paper printed by the printer (180a, 180b).

28. A controlling device as set forth in any of the claims 20 to 27, wherein the printer driver and preferably the whole controlling device is provided in form of computer readable software.

## Patentansprüche

1. Verfahren zum Drucken einer Objektinstanz, welche beispielsweise mindestens eine Seite aufweist, von einer Computerarbeitsstation (150) auf einem Drucker (180a, 180b), wobei die Computerarbeitsstation (150) eine Anzeige, eine Benutzereingabevorrichtung und einen Druckertreiber aufweist, der Drucker (180a, 180b) eine Hefteinheit aufweist, die Zusammenhaltevorrichtungen an mindestens zwei Positionen platzieren kann, welches Verfahren die Schritte aufweist:
(a) einem Benutzer an der Computerarbeitsstation (150) anzeigen, dass die Objektinstanz zu drucken ist;
(b) Aufrufen (700) des Druckertreibers;
(c) Gewinnen (710) von Zusammenhaltevorrichtungspositionsvermögen, Papiergrößevermögen und Zuführungsorientierungsvermögen des Druckers (180a, 180b) durch den Druckertreiber;
(d) Gewinnen (720) eines gewünschten Papiertyps und einer gewünschten Bildorientierung der Objektinstanz durch den Druckertreiber;
(e) Bestimmen (740), als logische Heftpositionen, wo auf den bedruckten Seiten der Objektinstanz die Hefteinheit Zusammenhaltevorrichtungen anbringen kann, durch den Druckertreiber;
(f) Anzeigen (760, 765) einer Darstellung (420A; 420B) von mindestens einer Seite der Objektinstanz und der logischen Heftpositionen (430A, 431A; 430B, 431B) auf der Anzeige durch den Druckertreiber;
(g) durch den Benutzer, der die Eingabevorrichtung verwendet, dem Druckertreiber die logischen Heftpositionen (431A; 431B) zu Erkennen geben (770), an denen der Benutzer wünscht, dass der Drucker (180a, 180b) die Zusammenhaltevorrichtungen auf einer gedruckten Kopie der Objektinstanz platzieren soll; und
(h) Senden (780) eines Befehls oder mehrerer Befehle an den Drucker (180a, 180b) durch den Druckertreiber, um ein Ausmaß an Drehung der Objektinstanz anzuzeigen, und wo die Zusammenhaltevorrichtungen zu platzieren sind, um die logischen Heftpositionen (431A; 431B), die von dem Benutzer angezeigt worden sind, zu erfüllen.

2. Verfahren zum Drucken einer Objektinstanz von einer Computerarbeitsstation (150) auf einem Drucker (180a, 180b) nach Anspruch 1, bei dem in dem Schritt (c) der Druckertreiber die Heft-, Papiergröße- und Zuführungsorientierungsvermögen des Druckers (180a, 180b) durch Befragung des Druckers (180a, 180b) gewinnt, und der Drucker (180a, 180b) die Vermögen an die Computerarbeitsstation (150) übermittelt.

3. Verfahren zum Drucken eines Dokuments von einer Computerarbeitsstation (150) auf einem Drucker (180a, 180b) nach Anspruch 1, bei dem in Schritt (c) der Druckertreiber das Heft-, Papiergröße- und Zuführungsorientierungsvermögen von einer Default-Quelle in der Computerarbeitsstation (150) gewinnt.

4. Verfahren zum Drucken einer Objektinstanz von einer Computerarbeitsstation (150) auf einem Drucker (180a, 180b) nach einem der Ansprüche 1 bis 3, bei dem in Schritt (d) der Druckertreiber den gewünschten Papiertyp und die Bildorientierung der Objektinstanz von einem Anwendungsprogramm gewinnt, welches auf der Computerarbeitsstation (150) läuft.

5. Verfahren zum Drucken einer Objektinstanz von einer Computerarbeitsstation (150) auf einem Drucker (180a, 180b) nach Anspruch 4, bei dem der gewünschte Papiertyp und die Bildorientierung der Objektinstanz entweder durch den Benutzer über das Anwendungsprogramm ausgewählt, oder auf vordefinierte Standardeinstellungen gesetzt werden.

6. Verfahren zum Drucken eines Dokuments von einer Computerarbeitsstation (150) auf einem Drucker (180a, 180b) nach einem der Ansprüche 1 bis 5, bei dem der Schritt (d) vor dem Schritt (c) ausgeführt wird.

7. Verfahren zum Drucken einer Objektinstanz von einer Computerarbeitsstation (150) auf einem Drucker (180a, 180b) nach einem der Ansprüche 1 bis 6, bei dem in Schritt (f) die Darstellung (420A, 420B) ein reduziertes Bild von mindestens einer Seite der Objektinstanz aufweist.

8. Verfahren zum Drucken einer Objektinstanz von einer Computerarbeitsstation (150) auf einem Drucker (180a, 180b) nach einem der Ansprüche 1 bis 7, bei dem in Schritt (f) die Darstellung (420A, 420B) der Objektinstanz in der gewünschten Orientierung angezeigt wird.

9. Verfahren zum Drucken einer Objektinstanz von einer Computerarbeitsstation (150) auf einem Drucker (180a, 180b) nach einem der Ansprüche 1 bis 8, bei dem die Hefteinheit die Zusammenhaltevorrichtungen an drei festen Positionen anbringen kann, und der Druckertreiber mehr als drei logische Heftpositionen (430A, 431A; 430B, 431B) anzeigen kann.

10. Verfahren zum Drucken eines Dokuments von einer Computerarbeitsstation (150) auf einem Drucker (180a, 180b) nach einem der Ansprüche 1 bis 8, bei dem die Hefteinheit Zusammenhaltevorrichtung irgendwo innerhalb eines vordefinierten Bereichs von Positionen entlang mindestens eines Randes eines Blatt Papiers anbringen kann, welches von dem Drucker (180a, 180b) bedruckt worden ist.

11. Drucksystem zum Drucken einer Objektinstanz, welche mindestens eine Seite aufweist, wobei das Drucksystem (100) aufweist:
(a) eine Computerarbeitsstation (150) mit einer Anzeige, einer Benutzereingabevorrichtung und einem Druckertreiber; und
(b) einen Drucker (180a, 180b), der eine Hefteinheit aufweist, die Zusammenhaltevorrichtungen an mindestens zwei Positionen platzieren kann, wobei der Druckertreiber Anweisungen oder ein Mittel aufweist, zum:
(i) Gewinnen (710) von Zusammenhaltevorrichtungspositionsvermögen, Papiergrößevermögen und Zuführungsorientierungsvermögen des Druckers (180a, 180b);
(ii) Gewinnen (720) eines gewünschten Papiertyps und einer gewünschten Bildorientierung der Objekteinstanz;
(iii) Bestimmen (740), als logische Heftpositionen (430A, 431A, 430B, 431B), wo auf den gedruckten Seiten der Objektinstanz die Hefteinheit Zusammenhaltevorrichtungen anbringen kann;
(iv) Anzeigen (760, 765) einer Darstellung (420A; 420B) von mindestens einer Seite der Objektinstanz und der logischen Heftpositionen (430A, 4331A; 430B, 431B) auf der Anzeige;
(v) Annehmen einer Benutzereingabe von der Eingabevorrichtung, die die logischen Heftpositionen (431A; 431B) anzeigt (770), an denen der Benutzer wünscht, dass der Drucker (180a, 180b) Zusammenhaltevorrichtungen auf einer gedruckten Kopie der Objektinstanz platziert; und
(vi) Senden (780) von einem oder von mehreren Befehlen an den Drucker (180a, 180b), um ein Ausmaß an Drehung der Objektinstanz anzuzeigen, und wo Zusammenhaltevorrichtungen zu platzieren sind, um die logischen Heftpositionen (431A, 431B), die von dem Benutzer angezeigt worden sind, zu erfüllen.

12. Druckvorrichtung zum Drucken einer Objektinstanz, welche mindestens eine Seite aufweist, nach Anspruch 11, bei dem der Druckertreiber Anweisungen oder ein Mittel aufweist zum Gewinnen des Heft-, Papiergröße- und Zuführungsorientierungsvermögens des Druckers (180a, 180b) durch Befragung des Druckers (180a, 180b).

13. Drucksystem zum Drucken einer Objektinstanz, welche mindestens eine Seite aufweist, nach einem der Ansprüche 11 oder 12, bei dem der Druckertreiber Anweisungen oder ein Mittel aufweist zum Gewinnen des Heft-, Papiergröße- und Zuführungsorientierungsvermögen von einer Default-Quelle in der Computerarbeitsstation (150).

14. Drucksystem zum Drucken einer Objektinstanz, welche mindestens eine Seite aufweist, nach einem der Ansprüche 11 bis 13, bei dem der Druckertreiber Anweisungen oder ein Mittel aufweist zum Gewinnen des gewünschten Papiertyps und der Bildorientierung der Objektinstanz von einem Anwendungsprogramm, das auf der Computerarbeitsstation (150) läuft.

15. Drucksystem zum Drucken einer Objektinstanz, welche mindestens eine Seite aufweist, nach Anspruch 14, bei dem der gewünschte Papiertyp und die Bildorientierung der Objektinstanz entweder durch den Benutzer über das Anwendungsprogramm ausgewählt oder auf vordefinierte Standardeinstellungen gesetzt werden.

16. Drucksystem zum Drucken einer Objektinstanz, welche mindestens eine Seite aufweist, nach einem der Ansprüche 11 bis 15, bei dem die Darstellung (420A, 420B) ein reduziertes Bild von mindestens einer Seite der Objektinstanz aufweist.

17. Drucksystem zum Drucken einer Objektinstanz, welche mindestens eine Seite aufweist, nach einem der Ansprüche 11 bis 16, bei dem der Druckertreiber Anweisungen oder ein Mittel aufweist zur Anzeige der Darstellung (420A, 420B) der Objektinstanz in der gewünschten Orientierung.

18. Drucksystem zum Drucken einer Objektinstanz, welche mindestens eine Seite aufweist, nach einem der Ansprüche 11 bis 17, bei dem die Hefteinheit Zusammenhaltevorrichtungen an drei festen Positionen anordnen kann, und der Druckertreiber mehr als drei logische Heftpositionen (430A, 431A; 430B, 431B) bereitstellt.

19. Drucksystem zum Drucken einer Objektinstanz, welche mindestens eine Seite aufweist, nach einem der Ansprüche 11 bis 17, bei dem die Hefteinheit Zusammenhaltevorrichtungen irgendwo innerhalb eines vordefinierten Bereichs von Positionen entlang mindestens eines Randes eines Papierblatts anbringen kann, welches von dem Drucker bedruckt worden ist (180a, 180b).

20. Steuervorrichtung zum Steuern eines Drucksystems, wobei die Steuervorrichtung einen Druckertreiber aufweist, der in einem Computer installiert sein kann und/oder in der Lage ist, mit einem darin enthaltenen Computer zu kommunizieren, zum Drucken einer Objektinstanz, welche mindestens eine Seite aufweist, von einer Computerarbeitsstation (150), wobei die Computerarbeitsstation (150) eine Anzeige und eine Benutzereingabevorrichtung aufweist, wobei der Druckertreiber ein Mittel oder Anweisungen aufweist zum:
(a) Gewinnen (710) von Zusammenhaltevorrichtungspositionsvermögen, Papiergrößenvermögen und Zuführungsorientierungsvermögen eines Druckers (180a, 180b), wobei der Drucker (180a, 180b) eine Hefteinheit aufweist, die die Zusammenhaltevorrichtungen an mindestens zwei Positionen platzieren kann;
(b) Gewinnen (720) eines gewünschten Papiertyps und einer gewünschten Bildorientierung der Objektinstanz;
(c) Bestimmen (740), als logische Heftpositionen (430A, 431A; 430B, 431B), wo auf den gedruckten Seiten der Objektinstanz die Hefteinheit Zusammenhaltevorrichtungen anbringen kann;
(d) Anzeigen (760, 765) einer Darstellung (420A; 420B) von mindestens einer Seite der Objektinstanz und der logischen Heftpositionen auf der Anzeige;
(e) Annehmen einer Benutzereingabe von der Eingabevorrichtung, die die logischen Heftpositionen (431A; 431B) anzeigt (770), an denen der Benutzer wünscht, dass der Drucker (180a, 180b) die Zusammenhaltevorrichtungen auf der gedruckten Kopie der Objektinstanz platziert; und
(f) Senden (780) eines oder mehrerer Befehle an den Drucker (180a, 180b), um ein Ausmaß an Drehung der Objektinstanz anzuzeigen, und wo die Zusammenhaltevorrichtungen zu platzieren sind, um die logischen Heftpositionen (431A; 431B), die von dem Benutzer angezeigt worden sind, zu erfüllen.

21. Steuervorrichtung nach Anspruch 20, bei der der Druckertreiber ein Mittel oder Anweisungen aufweist zur Gewinnung des Heft-, Papiergröße- und Zuführungsorientierungsvermögen des Druckers, durch Befragung des Druckers (180a, 180b).

22. Steuervorrichtung nach einem der Ansprüche 20 oder 21, bei der der Druckertreiber ein Mittel oder Anweisungen aufweist zur Gewinnung des Heft-, Papiergrößeund Zuführungsorientierungsvermögen von einer Default-Quelle in der Computerarbeitsstation (150).

23. Steuervorrichtung nach einem der Ansprüche 20 bis 22, bei der der Druckertreiber ein Mittel oder Anweisungen aufweist zur Gewinnung des gewünschten Papiertyps und der Bildorientierung der Objektinstanz von einem Anwendungsprogramm, welches auf der Computerarbeitsstation (150) läuft.

24. Steuervorrichtung nach einem der Ansprüche 20 bis 23, bei der die Darstellung (420A; 420B) ein reduziertes Bild von mindestens einer Seite der Objektinstanz aufweist.

25. Steuervorrichtung nach einem der Ansprüche 20 bis 24, bei der der Druckertreiber ein Mittel oder Anweisungen aufweist zur Anzeige der Darstellung (420A; 420B) der Objektinstanz in der gewünschten Orientierung.

26. Steuervorrichtung nach einem der Ansprüche 20 bis 25, bei der die Hefteinheit die Zusammenhaltevorrichtungen an drei festen Positionen anordnen kann, und der Druckertreiber mehr als drei logische Heftpositionen (430A, 431A; 430B, 431B) bereitstellt.

27. Steuervorrichtung nach einem der Ansprüche 20 bis 25, bei der die Hefteinheit Zusammenhaltevorrichtung irgendwo innerhalb eines vordefinierten Bereichs von Positionen entlang mindestens eines Randes eines Papierblatts anbringen kann, welches von dem Drucker bedruckt worden ist (180a, 180b).

28. Steuervorrichtung nach einem der Ansprüche 20 bis 27, bei der der Druckertreiber und vorzugsweise die gesamte Steuervorrichtung in Form einer computerlesbaren Software ausgebildet sind.

## Revendications

1. Procédé d'impression d'une instance d'objet ayant au moins une page depuis un poste de travail informatique (150) sur une imprimante (180a, 180b), le poste de travail informatique (150) comprenant un écran, un dispositif d'entrée d'utilisateur et un pilote d'imprimante, l'imprimante (180a, 180b) comprenant une unité d'agrafage pouvant placer des dispositifs de fixation dans au moins deux positions, le procédé comprenant les étapes suivantes :
(a) pour un utilisateur au poste de travail informatique (150), indiquer que l'instance d'objet doit être imprimée ;
(b) appeler (700) le pilote d'imprimante ;
(c) pour le pilote d'imprimante, obtenir (710) les capacités de position des dispositifs de fixation, les capacités de taille de papier et les capacités d'orientation de l'alimentation de l'imprimante (180a, 180b) ;
(d) pour le pilote d'imprimante, obtenir (720) un type de papier voulu et une orientation d'image souhaitée de l'instance d'objet ;
(e) pour le pilote d'imprimante, déterminer (740), en tant que positions d'agrafage logiques, où sur les pages imprimées de l'instance d'objet, l'unité d'agrafage pourrait fixer les dispositifs de fixation ;
(f) pour le pilote d'imprimante, afficher (760, 765) sur l'écran une représentation (420A ; 420B) d'au moins une page de l'instance d'objet et les positions d'agrafage logiques (430A, 431A ; 430B, 431B) ;
(g) pour l'utilisateur, en utilisant le dispositif d'entrée, indiquer (770) au pilote d'imprimante à quelles positions d'agrafage logiques (431A ; 431B) l'utilisateur souhaite que l'imprimante (180a, 180b) place les dispositifs de fixation sur une copie imprimée de l'instance d'objet ; et
(h) pour le pilote d'imprimante, envoyer (780) une ou plusieurs commandes à l'imprimante (180a, 180b) indiquant une valeur de rotation pour l'instance d'objet et où placer les dispositifs de fixation pour atteindre les positions d'agrafage logiques (431A ; 431B) indiquées par l'utilisateur.

2. Procédé d'impression d'une instance d'objet depuis un poste de travail informatique (150) sur une imprimante (180a, 180b) selon la revendication 1, dans lequel à l'étape (c), le pilote d'imprimante obtient les capacités d'agrafage, de taille de papier et d'orientation d'alimentation de l'imprimante (180a, 180b) en interrogeant l'imprimante (180a, 180b) et l'imprimante (180a, 180b) communique les capacités au poste de travail informatique (150).

3. Procédé d'impression d'un document depuis un poste de travail informatique (150) sur une imprimante (180a, 180b) selon la revendication 1, dans lequel à l'étape (c), le pilote d'imprimante obtient les capacités d'agrafage, de taille de papier et d'orientation d'alimentation à partir d'une source par défaut dans le poste de travail informatique (150).

4. Procédé d'impression d'une instance d'objet depuis un poste de travail informatique (150) sur une imprimante (180a, 180b) selon l'une quelconque des revendications 1 à 3, dans lequel à l'étape (d), le pilote d'imprimante obtient le type de papier et l'orientation d'image voulus de l'instance d'objet à partir d'un programme d'application exécuté sur le poste de travail informatique (150).

5. Procédé d'impression d'une instance d'objet depuis un poste de travail informatique (150) sur une imprimante (180a, 180b) selon la revendication 4, dans lequel le type de papier et l'orientation d'image voulus de l'instance d'objet sont soit sélectionnés par l'utilisateur via le programme d'application, soit fixés à des valeurs par défaut prédéfinies.

6. Procédé d'impression d'un document depuis un poste de travail informatique (150) sur une imprimante (180a, 180b) selon l'une quelconque des revendications 1 à 5, dans lequel l'étape (d) est réalisée avant l'étape (c).

7. Procédé d'impression d'une instance d'objet depuis un poste de travail informatique (150) sur une imprimante (180a, 180b) selon l'une quelconque des revendications 1 à 6, dans lequel à l'étape (f), la représentation (420A, 420B) comprend une image réduite d'au moins une page de l'instance d'objet.

8. Procédé d'impression d'une instance d'objet depuis un poste de travail informatique (150) sur une imprimante (180a, 180b) selon l'une quelconque des revendications 1 à 7, dans lequel à l'étape (f), la représentation (420A, 420B) de l'instance d'objet est affichée dans l'orientation voulue.

9. Procédé d'impression d'une instance d'objet depuis un poste de travail informatique (150) sur une imprimante ([80a, 180b) selon l'une quelconque des revendications 1 à 8, dans lequel l'unité d'agrafage peut mettre les dispositifs de fixation dans trois positions fixes et le pilote d'imprimante affiche plus de trois positions d'agrafage logiques (430A, 431A ; 430B, 431B).

10. Procédé d'impression d'un document depuis un poste de travail informatique (150) sur une imprimante (180a, 180b) selon l'une quelconque des revendications 1 à 8, dans lequel l'unité d'agrafage peut placer les dispositifs de fixation dans l'une quelconque d'une plage prédéfinie de positions, le long d'au moins un bord d'une feuille de papier imprimée par l'imprimante (180a, 180b).

11. Système d'impression pour imprimer une instance d'objet ayant au moins une page, le système d'impression (100) comprenant :
(a) un poste de travail informatique (150) comprenant un écran, un dispositif d'entrée d'utilisateur et un pilote d'imprimante ; et
(b) une imprimante (180a, 180b) comprenant une unité d'agrafage pouvant placer des dispositifs de fixation dans au moins deux positions,
dans lequel le pilote d'imprimante comprend des instructions ou des moyens pour :
(i) obtenir (710) les capacités de position des dispositifs de fixation, les capacités de taille de papier et les capacités d'orientation de l'alimentation de l'imprimante (180a, 180b) ;
(ii) obtenir (720) un type de papier voulu et une orientation d'image souhaitée de l'instance d'objet ;
(iii) déterminer (740), en tant que positions d'agrafage logiques (430A, 431A; 430B, 431B), où sur les pages imprimées de l'instance d'objet, l'unité d'agrafage pourrait fixer les dispositifs de fixation ;
(iv) afficher (760, 765) sur l'écran une représentation (420A ; 420B) d'au moins une page de l'instance d'objet et les positions d'agrafage logiques (430A, 431A ; 430B, 431B) ;
(v) accepter une entrée d'utilisateur provenant du dispositif d'entrée indiquant (770) à quelles positions d'agrafage logiques (431A ; 431B) l'utilisateur souhaite que l'imprimante (180a, 180b) place les dispositifs de fixation sur une copie imprimée de l'instance d'objet ; et
(vi) envoyer (780) une ou plusieurs commandes à l'imprimante (180a, 180b) indiquant une valeur de rotation pour l'instance d'objet et où placer les dispositifs de fixation pour atteindre les positions d'agrafage logiques (431A ; 431B) indiquées par l'utilisateur.

12. Système d'impression pour imprimer une instance d'objet ayant au moins une page selon la revendication 11, le pilote d'imprimante comprenant des instructions ou des moyens pour obtenir les capacités d'agrafage, de taille de papier et d'orientation d'alimentation de l'imprimante (180a, 180b) en interrogeant l'imprimante (180a, 180b).

13. Système d'impression pour imprimer une instance d'objet ayant au moins une page selon l'une quelconque des revendications 11 ou 12, le pilote d'imprimante comprenant des instructions ou des moyens pour obtenir les capacités d'agrafage, de taille de papier et d'orientation d'alimentation à partir d'une source par défaut dans le poste de travail informatique (150).

14. Système d'impression pour imprimer une instance d'objet ayant au moins une page selon l'une quelconque des revendications 11 à 13, le pilote d'imprimante comprenant des instructions ou des moyens pour obtenir le type de papier et l'orientation d'image voulus de l'instance d'objet à partir d'un programme d'application exécuté sur le poste de travail informatique (150).

15. Système d'impression pour imprimer une instance d'objet ayant au moins une page selon la revendication 14,
dans lequel le type de papier et l'orientation d'image voulus de l'instance d'objet sont soit sélectionnés par l'utilisateur via le programme d'application, soit fixés à des valeurs par défaut prédéfinies.

16. Système d'impression pour imprimer une instance d'objet ayant au moins une page selon l'une quelconque des revendications 11 à 15, la représentation (420A, 420B) comprenant une image réduite d'au moins une page de l'instance d'objet.

17. Système d'impression pour imprimer une instance d'objet ayant au moins une page selon l'une quelconque des revendications 11 à 16, le pilote d'imprimante comprenant des instructions ou des moyens pour afficher la représentation (420A, 420B) de l'instance d'objet dans l'orientation voulue.

18. Système d'impression pour imprimer une instance d'objet ayant au moins une page selon l'une quelconque des revendications 11 à 17, dans lequel l'unité d'agrafage peut mettre des dispositifs de fixation dans trois positions fixes et le pilote d'imprimante fournit plus de trois positions d'agrafage logiques (430A, 431A ; 430B, 431B).

19. Système d'impression pour imprimer une instance d'objet ayant au moins une page selon l'une quelconque des revendications 11 à 17, dans lequel l'unité d'agrafage peut placer des dispositifs de fixation dans l'une quelconque d'une plage prédéfinie de positions, le long d'au moins un bord d'une feuille de papier imprimée par l'imprimante (180a, 180b).

20. Dispositif de commande pour commander un système d'impression, le dispositif de commande ayant un pilote d'imprimante qui peut être installé et/ou peut communiquer avec un ordinateur intégré dans celui-ci pour imprimer une instance d'objet ayant au moins une page depuis un poste de travail informatique (150), le poste de travail informatique (150) comprenant un écran et un dispositif d'entrée d'utilisateur, le pilote d'imprimante comprenant des moyens ou des instructions pour :
(a) obtenir (710) les capacités de position des dispositifs de fixation, les capacités de taille de papier et les capacités d'orientation d'une imprimante (180a, 180b), l'imprimante (180a, 180b) comprenant une unité d'agrafage pouvant placer les dispositifs de fixation dans au moins deux positions ;
(b) obtenir (720) un type de papier voulu et une orientation d'image souhaitée de l'instance d'objet ;
(c) déterminer (740), en tant que positions d'agrafage logiques (430A, 431A; 430B, 431B), où sur les pages imprimées de l'instance d'objet, l'unité d'agrafage pourrait fixer les dispositifs de fixation ;
(d) afficher (760, 765) sur l'écran une représentation (420A ; 420B) d'au moins une page de l'instance d'objet et les positions d'agrafage logiques (430A, 431A ; 430B, 431B) ;
(e) accepter une entrée d'utilisateur provenant du dispositif d'entrée indiquant (770) à quelles positions d'agrafage logiques (431A ; 431B) l'utilisateur souhaite que l'imprimante (180a, 180b) place les dispositifs de fixation sur une copie imprimée de l'instance d'objet ; et
(f) envoyer (780) une ou plusieurs commandes à l'imprimante (180a, 180b) indiquant une valeur de rotation pour l'instance d'objet et où placer les dispositifs de fixation pour atteindre les positions d'agrafage logiques (431A ; 431B) indiquées par l'utilisateur.

21. Dispositif de commande selon la revendication 20, le pilote d'imprimante comprenant des moyens ou des instructions pour obtenir les capacités d'agrafage, de taille de papier et d'orientation d'alimentation de l'imprimante en interrogeant l'imprimante (180a, 180b).

22. Dispositif de commande selon l'une quelconque des revendications 20 ou 21, le pilote d'imprimante comprenant des moyens ou des instructions pour obtenir les capacités d'agrafage, de taille de papier et d'orientation d'alimentation à partir d'une source par défaut dans le poste de travail informatique (150).

23. Dispositif de commande selon l'une quelconque des revendications 20 à 22, le pilote d'imprimante comprenant des moyens ou des instructions pour obtenir le type de papier et l'orientation d'image voulus de l'instance d'objet à partir d'un programme d'application exécuté sur le poste de travail informatique (150).

24. Dispositif de commande selon l'une quelconque des revendications 20 à 23, la représentation (420A ; 420B) comprenant une image réduite d'au moins une page de l'instance d'objet.

25. Dispositif de commande selon l'une quelconque des revendications 20 à 24, le pilote d'imprimante comprenant des moyens ou des instructions pour afficher la représentation (420A, 420B) de l'instance d'objet dans l'orientation voulue.

26. Dispositif de commande selon l'une quelconque des revendications 20 à 25, dans lequel l'unité d'agrafage peut mettre des dispositifs de fixation dans trois positions fixes et le pilote d'imprimante fournit plus de trois positions d'agrafage logiques (430A, 431A ; 430B, 431B).

27. Dispositif de commande selon l'une quelconque des revendications 20 à 25, dans lequel l'unité d'agrafage peut placer des dispositifs de fixation dans l'une quelconque d'une plage prédéfinie de positions, le long d'au moins un bord d'une feuille de papier imprimée par l'imprimante (180a, 180b).

28. Dispositif de commande selon l'une quelconque des revendications 20 à 27, dans lequel le pilote d'imprimante et de préférence tout le dispositif de commande sont fournis sous la forme d'un logiciel lisible sur ordinateur.
